# EUROPÄISCHE PATENTSCHRIFT

(11) **EP 4 433 699 B1**
(45) Veröffentlichungstag und Bekanntmachung des Hinweises auf die Patenterteilung: **11.03.2026**
(21) Anmeldenummer: 22790315.0
(22) Anmeldetag: 26.09.2022
(51) Int. Cl.: F02M 21/02, F16K 1/34

(54) **GASINJEKTOR MIT UNTERDRUCKGESTEUERTEM ZWEITEM DICHTSITZ**
GAS INJECTOR COMPRISING A VACUUM-CONTROLLED SECOND SEALING SEAT
INJECTEUR DE GAZ COMPRENANT UN DEUXIÈME SIÈGE D'ÉTANCHÉITÉ COMMANDÉ PAR VIDE

(30) Priorität: 19.11.2021 DE 102021213023
(43) Veröffentlichungstag der Anmeldung: 25.09.2024
(73) Patentinhaber: Robert Bosch GmbH, 70442 Stuttgart (DE)
(72) Erfinder: SCHMIEDER, Dietmar, 71706 Markgroeningen (DE); STIER, Hubert, 71665 Vaihingen/Enz (DE)
(86) Internationale Anmeldenummer: PCT/EP2022/076657
(87) Internationale Veröffentlichungsnummer: WO 2023/088596

(56) Entgegenhaltungen:
- EP-A1- 0 863 300
- DE-A1- 102014 224 340
- DE-A1- 102016 211 831
- DE-A1- 3 119 211
- DE-T5- 112014 005 309

## Beschreibung

### Stand der Technik

Die vorliegende Erfindung betrifft einen Gasinjektor zum Einblasen eines gasförmigen Mediums, insbesondere Wasserstoff oder Erdgas, mit einem zweiten Dichtsitz, welcher unterdruckgesteuert geöffnet werden kann.

Gasinjektoren sind aus dem Stand der Technik in unterschiedlichen Ausgestaltungen bekannt, z.B. aus EP 0 863 300 A1.

Im Vergleich mit Kraftstoffinjektoren für flüssige Kraftstoffe sind die technischen Anforderungen an Gasinjektoren deutlich unterschiedlich. Ein Problemkreis bei Gasinjektoren ist dabei eine Abdichtung des Gasinjektors über längere Zeiträume. Hier sollte beispielsweise vermieden werden, dass gasförmiger Kraftstoff im abgestellten Zustand einer Brennkraftmaschine trotz geschlossenem Dichtsitz aus dem Gasinjektor in den Brennraum über den eigentlich geschlossenen Dichtsitz hinaus diffundiert und gegebenenfalls in die Umgebung gelangt. Dies sollte jedoch unbedingt vermieden werden.

### Offenbarung der Erfindung

Der erfindungsgemäße Gasinjektor zum Einblasen eines gasförmigen Mediums mit den Merkmalen des Anspruchs 1 weist demgegenüber den Vorteil auf, dass bei einem auch über längere Zeiten geschlossenen Gasinjektor eine signifikante Reduzierung eines möglichen Verlustes des gasförmigen Mediums aus dem Gasinjektor möglich ist. Weiterhin kann zum Öffnen eines zweiten Dichtsitzes, welcher insbesondere als Elastomerdichtsitz ausgebildet ist, neben einer verbesserten Abdichtung auch ein sicheres Öffnen auch bei großen Dichtdurchmessern des zweiten Dichtsitzes erreicht werden. Dabei ist der erfindungsgemäße Gasinjektor sehr einfach und kostengünstig aufgebaut. Dies wird erfindungsgemäß dadurch erreicht, dass der Gasinjektor ein Schließelement umfasst, welches eine Durchgangsöffnung an einem Dichtsitz freigibt und verschließt. Ferner ist ein Aktor zur Betätigung des Schließelements vorgesehen. Der Gasinjektor umfasst ferner ein Rückstellelement zum Zurückstellen des Schließelements. Der zweite Dichtsitz, welcher in Durchströmungsrichtung des gasförmigen Mediums durch den Gasinjektor zwischen einem Gaszuleitungsanschluss und dem ersten Dichtsitz angeordnet ist, gibt einen Gasströmungspfad durch den Gasinjektor frei und verschließt diesen. Der Gasinjektor umfasst dabei einen Unterdruckanschluss, welcher in Durchströmungsrichtung des Mediums durch den Gasinjektor vor dem zweiten Dichtsitz angeordnet ist. Weiterhin umfasst der erfindungsgemäße Gasinjektor ein Regelventil, welches am Unterdruckanschluss angeordnet ist und eingerichtet ist, den Unterdruckanschluss mit einer Unterdruckquelle zu verbinden, um den zweiten Dichtsitz zu öffnen. Das Regelventil ist vorzugsweise ein 2/2-Wegeventil. Durch das Vorsehen von zwei Dichtsitzen kann somit auch bei einem längeren Stillstand und einer Nichtbetätigung des Gasinjektors eine Gasdichtheit des Gasinjektors sichergestellt werden. Selbst unter der Annahme, dass der erste Dichtsitz, welcher zum Brennraum gerichtet ist, undicht werden würde, ist aufgrund des zweiten Dichtsitzes zumindest eine aus dem Gasinjektor möglicherweise ausströmende Menge des gasförmigen Mediums auf das Volumen zwischen dem ersten und dem zweiten Dichtsitz reduziert. Ferner kann durch die pneumatische Betätigung mittels Unterdruck zum Öffnen des zweiten Dichtsitzes ein sehr einfacher und kostengünstiger Aufbau des Gasinjektors erreicht werden. Dadurch können auch Wärmeprobleme am Gasinjektor, welche bei möglicherweise elektrisch betätigbaren Absperrelementen vorkommen können, vermieden werden.

Die Unteransprüche zeigen bevorzugte Weiterbildungen der Erfindung.

Vorzugsweise ist der zweite Dichtsitz zwischen einem axial bewegbaren Kolbenelement und einem Gehäusebauteil ausgebildet. Das Kolbenelement ermöglicht eine einfache und sichere Öffnung des zweiten Dichtsitzes mittels Unterdruck.

Vorzugsweise umfasst der Gasinjektor ferner einen dritten Dichtsitz, welcher am Kolbenelement angeordnet ist. Der dritte Dichtsitz gibt eine Verbindung zwischen dem Gasströmungspfad im Gasinjektor und dem Regelventil frei und verschließt diese. Dabei ist das Kolbenelement zwischen dem zweiten und dem dritten Dichtsitz hin- und herbewegbar. Somit sind der zweite und dritte Dichtsitz nicht zur gleichen Zeit geschlossen.

Besonders bevorzugt ist der dritte Dichtsitz zwischen einem radial nach außen gerichteten Flansch am Kolbenelement und einer Anschlagseite an einem Gehäusebauteil ausgebildet. Das Gehäusebauteil dient vorzugsweise auch als Führungsbauteil für das Kolbenelement.

Das Kolbenelement ist vorzugsweise ein Hohlkolben mit einer Kolbenstirnseite, wobei der zweite Dichtsitz an der Kolbenstirnseite abdichtet. Der zweite Dichtsitz ist dabei vorzugsweise an einem radial nach innen gerichteten Vorsprung des Gehäuses ausgebildet, so dass durch Axialbewegung des Kolbenelements ein Öffnen und Schließen des zweiten Dichtsitzes möglich ist. Der Hohlkolben weist hierzu vorzugsweise einen oder mehrere Durchbrüche an einem Kolbenmantel auf.

Weiter bevorzugt umfasst der Gasinjektor einen Steuerraum, welcher an einem Außenumfang des Kolbenelements ausgebildet ist und in dem Verbindungspfad zwischen dem Gasströmungspfad und dem Regelventil liegt. Vorzugsweise ist dabei eine Drossel zwischen dem Steuerraum und dem Gasströmungspfad vorhanden. Die Drossel verhindert dabei ein Abströmen von gasförmigem Medium aus dem Gasströmungspfad in den durch das geöffnete Regelventil entstehenden Unterdruckbereich des Gasinjektors. Die Drossel ist vorzugsweise ein Drosselspalt am Außenumfang des Kolbenelements zu einem Gehäusebauteil oder alternativ ist die Drossel in dem Gehäusebauteil, insbesondere der Anschlagscheibe, ausgebildet.

Weiter bevorzugt umfasst der Gasinjektor einen Speicher, welcher dem Regelventil nachgeschaltet ist. Somit ist der Speicher zwischen dem Regelventil und der Unterdruckquelle angeordnet. Zwischen dem Speicher und der Unterdruckwelle ist weiter bevorzugt eine Drossel vorgesehen. Dadurch wird sichergestellt, dass bei einem Starten der Brennkraftmaschine gasförmiges Medium, welches sich im Steuervolumen zum Öffnen des zweiten Dichtsitzes befindet, nicht auf einmal bzw. in einen Ansaugtrakt, welcher eine Unterdruckquelle der Brennkraftmaschine sein kann, zugeführt wird und sich dort ein zündfähiges Gemisch bildet. Über den Speicher und insbesondere die Drossel kann ein langsames Abgeben des gasförmigen Mediums in den Ansaugtrakt ermöglicht werden.

Weiter bevorzugt ist am zweiten Dichtsitz ein Elastomerdichtelement mit einem Halteblech angeordnet. Das Halteblech ermöglicht dabei die Verwendung von einfach aufgebauten Dichtelementen, beispielsweise standardisierten O-Ringen und kann auch eine Dichtfähigkeit des Dichtelements durch eine größere Dichtfläche zwischen dem Dichtelement und dem Halteblech ermöglichen. Ferner kann das Halteblech einen ausreichenden Quellraum zum elastischen Verformen des Dichtelements bereitstellen.

Weiter bevorzugt ist der Aktor in einem abgeschlossenen Raum angeordnet. Der abgeschlossene Raum für den Aktor ist vorzugsweise mittels einer Metallmembran abgedichtet. Dadurch kommt der Aktor nicht mit dem gasförmigen Medium in Berührung und eine Korrosionsproblematik an Bauteilen des Aktors kann vermieden werden.

Ferner betrifft die vorliegende Erfindung eine Brennkraftmaschine mit einem erfindungsgemäßen Gasinjektor. Die Brennkraftmaschine umfasst bevorzugt als Unterdruckquelle ein Ansaugrohr der Brennkraftmaschine, welches über das Regelventil mit dem Gasinjektor in Fluidverbindung steht. Eine Mündung einer Verbindungsleitung zwischen dem Ansaugrohr und dem Gasinjektor liegt vorzugsweise nach einer Drosselklappe im Ansaugrohr.

Weiter bevorzugt umfasst die Brennkraftmaschine eine Vielzahl von Gasinjektoren, wobei alle Gasinjektoren nur an einem einzigen, gemeinsamen Regelventil angeschlossen sind. Dadurch können die Investitionskosten für die erfindungsgemäße Einblaseinrichtung signifikant reduziert werden.

Weiter bevorzugt umfasst die Brennkraftmaschine einen Katalysator, wobei eine Steuermenge des gasförmigen Mediums, welche durch Öffnen des Regelventils abströmt, zum Katalysator geführt wird. Vorzugsweise ist hierbei in dem Verbindungspfad zwischen dem Regelventil und dem Katalysator ein Speicher zur Zwischenspeicherung des gasförmigen Mediums angeordnet, um sicherzustellen, dass der Gasinjektor nach einem Kaltstart ausreichend temperiert ist und die Bestandteile der Steuermenge des gasförmigen Mediums in für die Umwelt unbedenkliche Gaskomponenten umwandeln kann.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Schnittansicht eines Gasinjektors gemäß einem ersten Ausführungsbeispiel der Erfindung im geschlossenen Zustand,
- Figur 2: eine vergrößerte Darstellung eines zweiten Dichtsitzes des Gasinjektors von Figur 1 im geschlossenen Zustand,
- Figur 3: eine schematische Darstellung des zweiten Dichtsitzes des Gasinjektors von Figur 1 im geöffneten Zustand,
- Figur 4: eine schematische Teilschnittansicht eines Gasinjektors gemäß einem zweiten Ausführungsbeispiel im geöffneten Zustand mit einer zusätzlichen Detaildarstellung,
- Figur 5: eine schematische Teilschnittansicht eines Gasinjektors gemäß dem zweiten Ausführungsbeispiel im geschlossenen Zustand mit einer zusätzlichen Detaildarstellung,
- Figur 6: eine schematische Teilschnittansicht eines Gasinjektors gemäß einem dritten Ausführungsbeispiel im geöffneten Zustand,
- Figur 7: eine schematische Teilschnittansicht eines Gasinjektors gemäß einem vierten Ausführungsbeispiel im geöffneten Zustand, und
- Figur 8: eine schematische Darstellung eines Gasinjektors gemäß einem fünften Ausführungsbeispiel der Erfindung.

### Bevorzugte Ausführungsformen der Erfindung

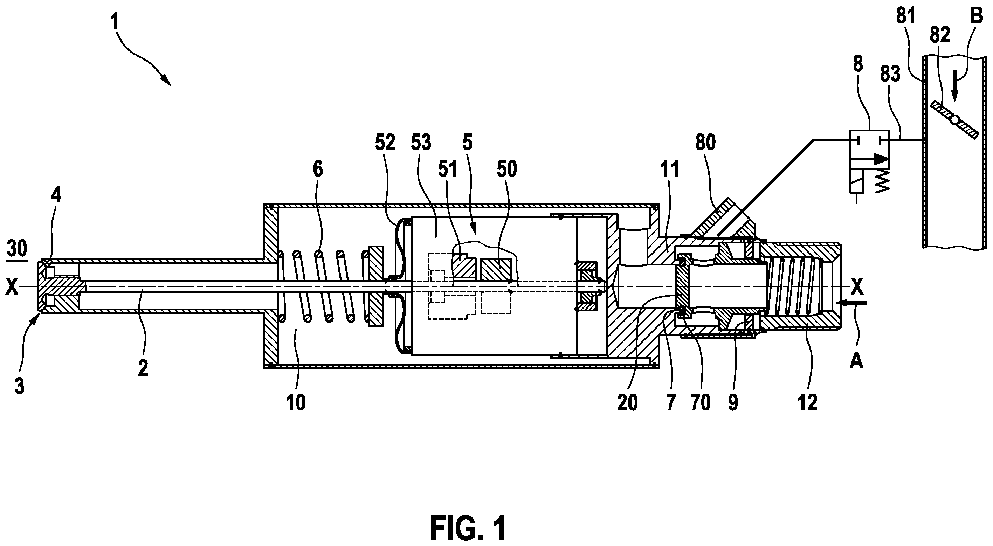

Nachfolgend wird unter Bezugnahme auf die Figuren 1 bis 3 ein Gasinjektor 1 gemäß einem ersten bevorzugten Ausführungsbeispiel der Erfindung im Detail beschrieben.

Wie aus Figur 1 ersichtlich ist, umfasst der Gasinjektor zum Einblasen eines gasförmigen Mediums, insbesondere zum Einblasen von Wasserstoff, ein Schließelement 2 in Form einer Ventilnadel und einen Aktor 5. Der Aktor 5 ist eingerichtet, das Schließelement zu betätigen, um dieses in eine geöffnete Stellung zu bringen.

Der Aktor 5 ist als Magnetaktor mit einem Anker 50 und einem Innenpol 51 ausgebildet. Der Aktor 5 ist in einem abgeschlossenen Aktorraum 53, welcher mittels einer flexiblen Metallmembran 52 gegenüber dem gasförmigen Medium abgedichtet ist, angeordnet.

Das Schließelement 2 gibt eine Durchgangsöffnung 3 an einem ersten Dichtsitz 4 frei und verschließt diesen. Figur 1 zeigt den geschlossenen Zustand des Gasinjektors 1. Im geöffneten Zustand wird gasförmiges Medium in einen Brennraum 30 eingeblasen.

Eine Rückstellelement 6 stellt das Schließelement wieder in die in Figur 1 gezeigte geschlossenen Ausgangsposition zurück.

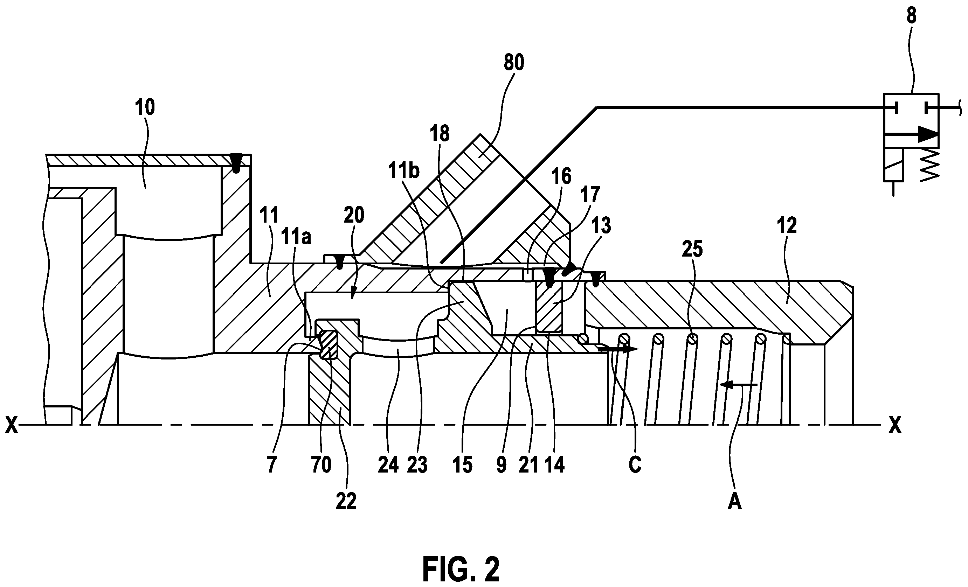

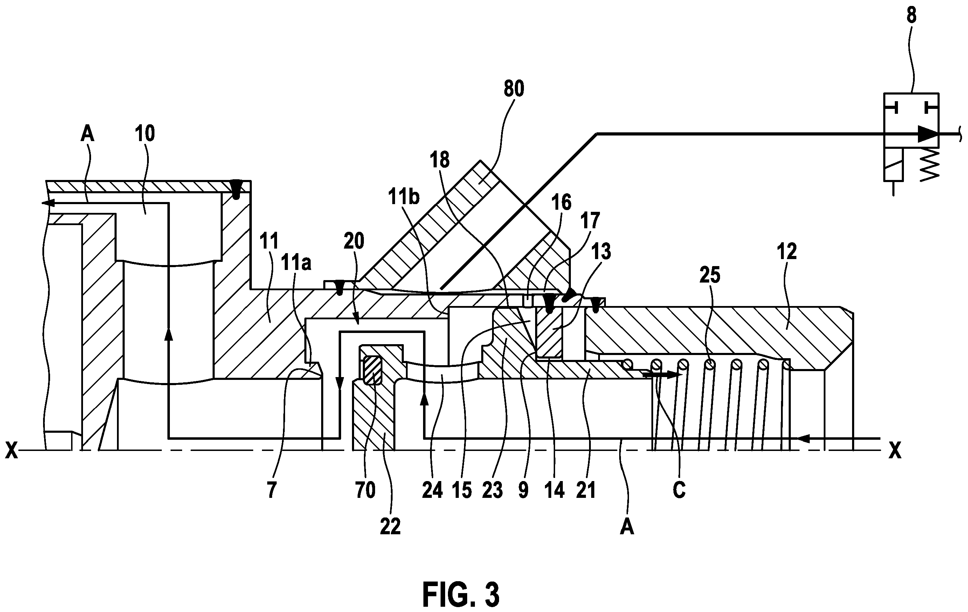

Der Gasinjektor 1 umfasst ferner einen zweiten Dichtsitz 7, welcher im Detail aus den Figuren 2 und 3 ersichtlich ist. Im geschlossenen Zustand des Gasinjektors bei ausgeschalteter Brennkraftmaschine sind sowohl der erste Dichtsitz 4 als auch der zweite Dichtsitz 7 geschlossen. Der zweite Dichtsitz 7 ist dabei vom Brennraum 30 weiter entfernt angeordnet, wobei der Aktor 5 zwischen dem ersten Dichtsitz 4 und dem zweiten Dichtsitz 7 angeordnet ist. Daher ist es möglich, dass der zweite Dichtsitz 7 ein elastomeres Dichtelement 70 umfasst. Das elastomere Dichtelement 70 kann im geschlossenen Zustand eine sehr gute Dichtheit bereitstellen, so dass auch bei einem längeren Stillstand des Gasinjektors kein Gas über den zweiten Dichtsitz 7 in einen Gasraum 10, welcher sich vor dem ersten Dichtsitz 4 befindet, diffundieren kann.

Das elastomere Dichtelement 70 ist in einer Nut in der Kolbenstirnfläche 22 angeordnet und weist im Wesentlichen einen rechteckigen Querschnitt mit abgerundeten Ecken auf.

Das elastomere Dichtelement 70 dichtet dabei an einem Gehäusebauteil 11 des Gasinjektors ab. Das Gehäusebauteil 11 weist hierbei einen umlaufenden Vorsprung 11a auf, an welchem der zweite Dichtsitz 7 ausgebildet ist.

Die Verwendung von zwei Dichtsitzen stellt somit sicher, dass in einem nicht benutzten Zustand des Gasinjektors 1 kein gasförmiges Medium aus einem Zulaufbereich 12 über den zweiten Dichtsitz 7 in den Gasraum 10 strömen kann.

Falls somit der erste Dichtsitz 4, beispielsweise aufgrund thermischer Einflüsse, undicht ist, verliert der Gasinjektor 1 maximal das sich im Gasraum 10 befindliche Gasvolumen zwischen dem ersten Dichtsitz 4 und dem zweiten Dichtsitz 7.

Der Gasinjektor 1 umfasst ferner einen Unterdruckanschluss 80, welcher in einer Durchströmungsrichtung (Pfeile A) des Gasinjektors vor dem zweiten Dichtsitz angeordnet ist und ein Regelventil 8 aufweist. Das Regelventil 8 ist ein 2/2-Wegeventil. Das Regelventil 8 ist mit dem Unterdruckanschluss 80 verbunden und ist eingerichtet, den Unterdruckanschluss 80 mit einer Unterdruckquelle zu verbinden, um den zweiten Dichtsitz 7 zu öffnen. In diesem Ausführungsbeispiel ist die Unterdruckquelle ein Ansaugrohr 81. Eine verbindende Leitung 83 zwischen dem Regelventil 8 und dem Ansaugrohr 81 mündet dabei im Ansaugrohr 81 in einen Bereich in Strömungsrichtung (Pfeil B) nach einer Drosselklappe 82.

Der Gasinjektor 1 umfasst ferner einen dritten Dichtsitz 9 sowie ein Kolbenelement 20. Das Kolbenelement 20 ist als Hohlkolben ausgebildet und umfasst einen Mantelbereich 21 sowie eine Kolbenstirnfläche 22. Das elastomere Dichtelement 70 ist dabei an der Kolbenstirnfläche 22 angeordnet (vgl. Figur 2). Ferner sind im Mantelbereich 21 mehrere Durchbrüche 24 vorgesehen, um bei geöffnetem Kolbenelement 20 (vgl. Figur 3) eine Gasströmung im Inneren des Gasinjektors zu ermöglichen. Am Außenumfang des Kolbenelements 20 ist ferner noch ein radial nach außen gerichteter Flansch 23 ausgebildet, der eine Führung für das Kolbenelement 20 bildet.

Der dritte Dichtsitz 9 ist zwischen dem radial nach außen gerichteten Flansch 23 und einer Anschlagscheibe 13, welche am Gehäusebauteil 11 fixiert ist, ausgebildet. Zwischen dem Mantelbereich 21 des Kolbenelements 20 und der Anschlagscheibe 13 ist ein Drosselspalt 14 vorgesehen. Dabei ist zwischen dem Flansch 23 und der Anschlagscheibe 13 ein Steuerraum 15 ausgebildet. Der Steuerraum 15 ist über eine oder mehrere Steuerbohrungen 16 und einen Radialspalt 17 mit dem Unterdruckanschluss 80 verbunden.

Das Kolbenelement 20 ist ferner mittels einer Rückstellfeder 25 in den am zweiten Dichtsitz 7 geschlossenen Zustand vorgespannt (vgl. Figur 2).

Somit sind der zweite Dichtsitz 7 und der dritte Dichtsitz 9 derart ausgebildet, dass nicht gleichzeitig beide Dichtsitze geschlossen sind. Im vollständig geöffneten Zustand des zweiten Dichtsitzes 7 ist der dritte Dichtsitz 9 geschlossen. Dies ist in Figur 3 gezeigt. Das Schließen des dritten Dichtsitzes 9 bzw. das Öffnen des zweiten Dichtsitzes 7 wird dabei mittels Unterdruck aus der Unterdruckquelle bereitgestellt.

Die Funktion des erfindungsgemäßen Gasinjektors 1 ist dabei wie folgt: Bei einem Start der Brennkraftmaschine wird im Ansaugrohr 81 ein Unterdruck erzeugt. Beim Start der Brennkraftmaschine wird gleichzeitig auch das Regelventil 8 bestromt, so dass dieses von der in Figur 2 gezeigten geschlossenen Stellung in die in Figur 3 gezeigte geöffnete Stellung überführt wird. Dadurch ist der Steuerraum 15 über die Steuerbohrungen 16, den Radialspalt 17 und das Anschlussstück 80 mit der Unterdruckquelle verbunden. Dadurch sinkt der Druck im Steuerraum 15, so dass das Kolbenelement 20, wie in Figur 2 durch den Pfeil C angedeutet, gegen die Federkraft der Rückstellfeder 25 in Axialrichtung in Richtung zum Zulaufbereich 12 bewegt wird. Dadurch öffnet der zweite Dichtsitz 7.

Figur 3 zeigt hierbei den vollständig geöffneten Zustand des zweiten Dichtsitzes 7, so dass das gasförmige Medium, wie durch den Pfeil A angedeutet, durch das hohle Kolbenelement 20, die Durchbrüche 24 vorbei am geöffneten zweiten Dichtsitz 7 in den Gasraum 10 einströmen kann und dann durch Betätigung des Aktors 5 in den Brennraum 30 eingeblasen werden kann.

Wie weiter aus Figur 3 ersichtlich ist, ist dabei durch die Bewegung des Kolbenelements 20 in Richtung des Pfeils C das Volumen des Steuerraums 15 deutlich verkleinert. Im vollständig geöffneten Zustand des zweiten Dichtsitzes 7 liegt dabei der Flansch 23 an der Anschlagscheibe 13 an. Dadurch ist der dritte Dichtsitz 9 geschlossen, so dass verhindert wird, dass gasförmige Medium aus dem Zulaufbereich 12 über den Steuerraum 15 und die Steuerbohrungen 16 zum Unterdruckanschluss 18 und von dort über das geöffnete Regelventil 8 in das Ansaugrohr strömen kann.

Um das Kolbenelement 20 bewegen zu können, ist ein Drosselspalt 18 zwischen dem Flansch 23 und dem Gehäusebauteil **11** vorgesehen sein. Hier tritt zwar eine gewisse Leckage über den Drosselspalt 18 in den Steuerraum 15 und von dort über das geöffnete Regelventil 8 in das Ansaugrohr auf, aufgrund der Länge des Drosselspalts 18 ist diese Leckage jedoch minimal.

Während des Betriebs der Brennkraftmaschine wird somit das Regelventil 8 kontinuierlich im offenen Zustand gehalten, so dass der zweite Dichtsitz 7 für die Einblasung von gasförmigem Medium immer geöffnet ist. Die eigentliche Einblasung erfolgt dann durch Öffnen und Schließen des ersten Dichtsitzes 4 mittels des Schließelements 2.

Da der zweite Dichtsitz 7 mittels Unterdruck geöffnet wird, ist es möglich, dass ein Sitzdurchmesser des zweiten Dichtsitzes 7 sehr groß gewählt werden kann. Dies ist deshalb bedeutend, da das gasförmige Medium im Vergleich mit flüssigen Kraftstoffen ein viel größeres Volumen aufweist, welches in kurzer Zeit in den Brennraum 30 eingeblasen werden muss.

Wenn die Brennkraftmaschine abgestellt wird, wird das Regelventil 8 durch Unterbrechen einer Bestromung des Regelventils 8 wieder geschlossen, wobei sich über den Drosselspalt 18 langsam wieder ein Druck im Steuerraum 15 aufbaut. Dadurch und durch Unterstützung des Rückstellelements 25 bewegt sich das Kolbenelement 20 wieder in die in Figur 2 gezeigte geschlossene Stellung, so dass der dritte Dichtsitz 9 geöffnet ist und der zweite Dichtsitz 7 geschlossen ist. Am Gehäusebauteil 11 ist dabei ein Anschlag 11b vorgesehen, welcher eine Rückstellbewegung des Kolbenelements 20 beendet.

Somit sind im abgeschalteten Zustand der Brennkraftmaschine der erste Dichtsitz 4 und der zweite Dichtsitz 7 geschlossen, so dass ein Verlust von gasförmigem Medium auch über einen längeren Stillstandszeitraum nicht zu befürchten ist.

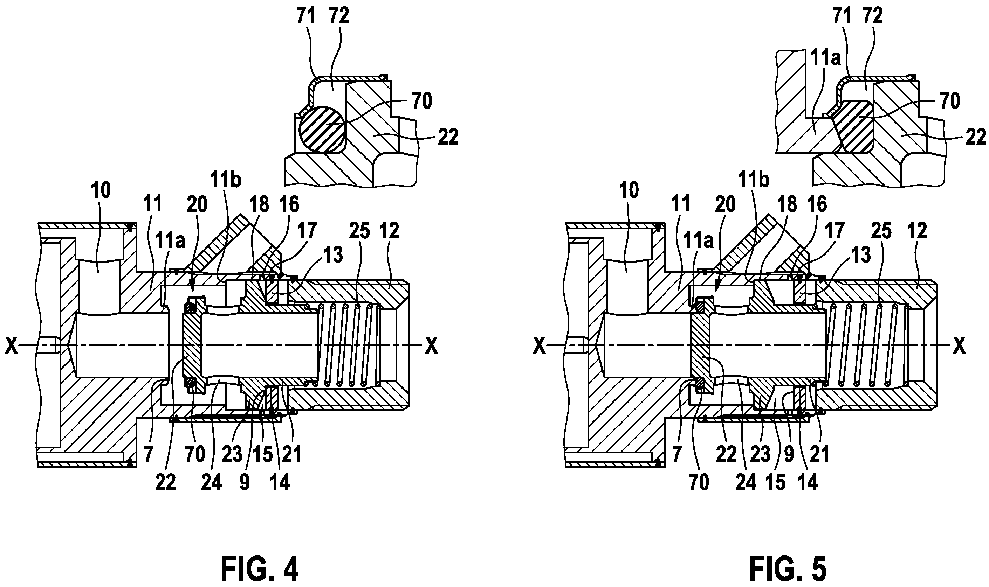

Die Figuren 4 und 5 zeigen einen Gasinjektor 1 gemäß einem zweiten Ausführungsbeispiel der Erfindung. Gleiche bzw. funktional gleiche Teile sind mit den gleichen Bezugszeichen wie im ersten Ausführungsbeispiel bezeichnet.

Im Unterschied zum ersten Ausführungsbeispiel ist das elastomere Dichtelement 70 beim zweiten Ausführungsbeispiel als O-Ring ausgebildet. Figur 4 zeigt den geöffneten Zustand des zweiten Dichtsitzes 7 und Figur 5 zeigt den geschlossenen Zustand des zweiten Dichtsitzes 7. Aus der zusätzlichen in Figur 4 dargestellten Vergrößerung ist ersichtlich, dass das als O-Ring ausgebildete elastomere Dichtelement 70 mittels eines Halteblechs 71 an der Kolbenstirnfläche 22 gehalten wird. Dadurch ergibt sich ein Quellraum 72, in welchen eine elastische Verformung des elastomeren Dichtelements 70 möglich ist. Dies ist in der Vergrößerung von Figur 5 dargestellt. Somit ist es möglich, dass ein standardisiertes, kostengünstiges elastomeres Dichtelement in Form eines O-Rings verwendet werden kann. Durch die Ausgestaltung mit dem Halteblech 71 sind ferner vergrößerte axiale Toleranzen möglich. Somit kann das elastomere Dichtelement 70 insbesondere besonders kostengünstig bereitgestellt werden. Das Halteblech 71 ist vorzugsweise mittels einer Schweißverbindung mit dem Kolbenelement 20 verbunden.

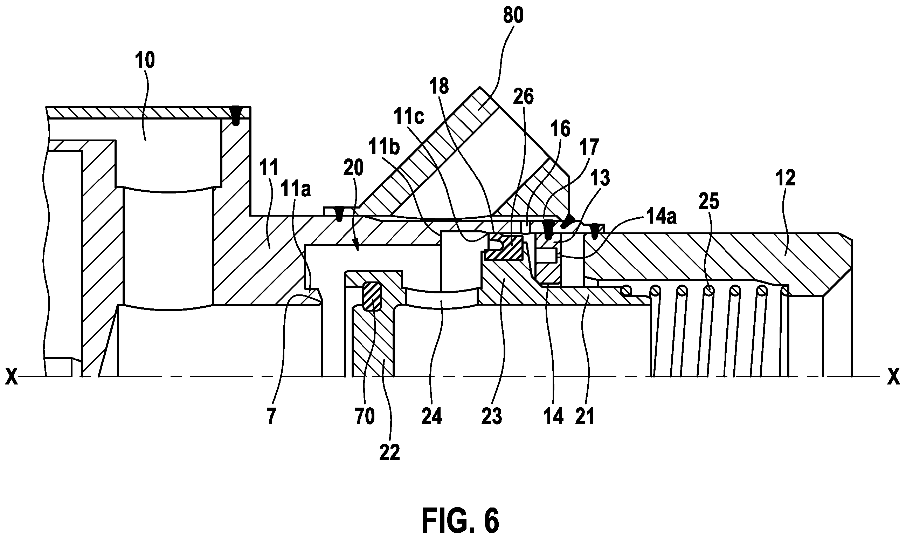

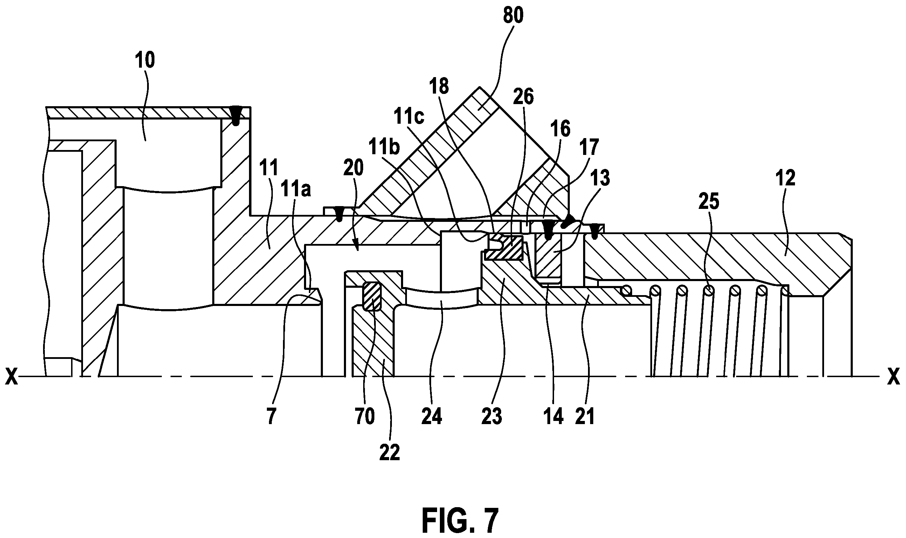

Die Figuren 6 und 7 zeigen einen Gasinjektor 1 gemäß einem dritten und vierten Ausführungsbeispiel der Erfindung. Gleiche bzw. funktional gleiche Teile sind mit den gleichen Bezugszeichen wie in den vorhergehenden Ausführungsbeispielen bezeichnet.

Im Unterschied zu den vorhergehenden Ausführungsbeispielen ist beim dritten und vierten Ausführungsbeispiel eine Lippendichtung 26 an einem äußeren Umfangsbereich des radial nach außen gerichteten Flansches 23 des Kolbenelements 20 angeordnet. Durch die Lippendichtung 26 kann die Charakteristik des Drosselspalts 18 beeinflusst werden. Insbesondere ermöglicht die Lippendichtung 26 hier eine kleinere Leckagemenge in den Steuerraum 15 bei geöffnetem zweiten Dichtsitz 7. Hierzu ist am Gehäusebauteil 11 eine kontinuierliche Durchmesserreduzierung 11c vorgesehen. In Figur 6 ist zusätzlich noch eine Drossel 14a in der Anschlagscheibe 13 ausgebildet. In Figur 7 ist alternativ die zusätzliche Drossel als Drosselspalt 14 vorgesehen. Ansonsten entsprechen diese Ausführungsbeispiele den vorhergehenden Ausführungsbeispielen, so dass auf die dort gegebene Beschreibung verwiesen werden kann.

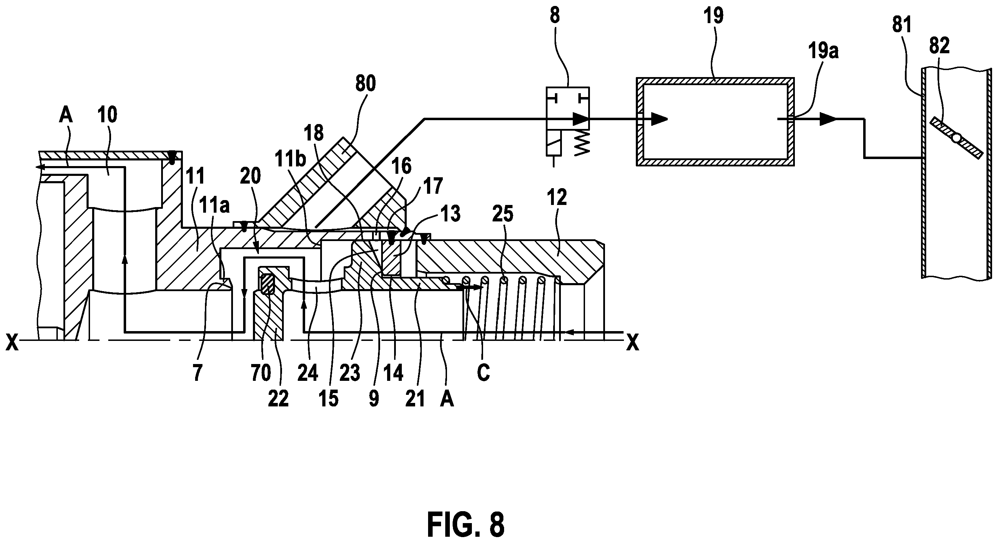

Figur 8 zeigt einen Gasinjektor 1 gemäß einem vierten Ausführungsbeispiel der Erfindung. Gleiche bzw. funktional gleiche Teile sind mit den gleichen Bezugszeichen wie in den vorhergehenden Ausführungsbeispielen bezeichnet.

Das vierte Ausführungsbeispiel entspricht im Wesentlichen dem ersten Ausführungsbeispiel, wobei zusätzlich zum ersten Ausführungsbeispiel beim vierten Ausführungsbeispiel noch ein Speicher 19 vorgesehen ist. Wie aus Figur 8 ersichtlich ist, ist der Speicher 19 zwischen dem Regelventil 8 und der Unterdruckquelle in Form des Ansaugrohrs 81 angeordnet. Am Ausgang des Speichers 19 ist eine Drossel 19a angeordnet, um ein Abströmen von gasförmigem Medium in das Ansaugrohr 81 in definierter Weise bereitzustellen. Dadurch wird eine gasförmige Steuermenge, welche sich im Volumenbereich ausgehend vom Steuerraum 15 bis zum Regelventil 8 befindet, langsamer in das Ansaugrohr 81 abgelassen. Somit wird die Menge an gasförmigem Medium, welches über das Ansaugrohr in die Brennkraftmaschine zugeführt wird, über einen längeren Zeitraum verteilt. Dadurch wird insbesondere verhindert, dass ein zündfähiges Gemisch im Ansaugrohr 81 entstehen kann. Ansonsten entspricht dieses Ausführungsbeispiel den vorhergehenden Ausführungsbeispielen, so dass auf die vorausgehende Beschreibung verwiesen werden kann.

## Patentansprüche

1. Gasinjektor zum Einblasen eines gasförmigen Mediums, umfassend
- ein Schließelement (2), welches eine Durchgangsöffnung (3) an einem ersten Dichtsitz (4) freigibt und verschließt,
- einen Aktor (5) zur Betätigung des Schließelements (2),
- ein Rückstellelement (6) zum Zurückstellen des Schließelements (2),
- einen zweiten Dichtsitz (7), welcher in Durchströmungsrichtung des gasförmigen Mediums zwischen einem Gaszuleitungsanschluss (12) und dem ersten Dichtsitz (4) angeordnet ist und einen Gasströmungspfad (A) im Gasinjektor freigibt und verschließt,
- einen Unterdruckanschluss (80), welcher in Durchströmungsrichtung des Gasinjektors vor dem zweiten Dichtsitz (7) angeordnet ist, und
- ein Regelventil (8), welches mit dem Unterdruckanschluss (80) in Fluidverbindung steht und eingerichtet ist, den Unterdruckanschluss (80) mit einer Unterdruckquelle (81) zu verbinden, um den zweiten Dichtsitz (7) zu öffnen,
wobei der erste Dichtsitz (4) und der zweite Dichtsitz (7) entlang einer Achse X-X des Gasinjektors angeordnet sind.

2. Gasinjektor nach Anspruch 1, wobei der zweite Dichtsitz (7) zwischen einem axial bewegbaren Kolbenelement (20) und einem Gehäusebauteil (11) ausgebildet ist.

3. Gasinjektor nach Anspruch 2, ferner umfassend einen dritten Dichtsitz (9), welcher am Kolbenelement (20) angeordnet ist und einen Verbindungspfad zwischen dem Gasströmungspfad im Gasinjektor und dem Regelventil (8) freigibt und verschließt, wobei das Kolbenelement (20) zwischen dem zweiten Dichtsitz (7) und dem dritten Dichtsitz (9) hin- und her bewegbar ist.

4. Gasinjektor nach Anspruch 3, wobei der dritte Dichtsitz (9) zwischen einem radial nach außen gerichtetem Flansch (23) am Kolbenelement (20) und einer Anschlagscheibe (13) am Gehäusebauteil (11) ausgebildet ist.

5. Gasinjektor nach einem der Ansprüche 2 bis 4, wobei das Kolbenelement (20) ein Hohlkolben ist, welcher eine Kolbenstirnfläche (22) aufweist, an welcher der zweite Dichtsitz (7) abdichtet.

6. Gasinjektor nach einem der Ansprüche 3 bis 5, ferner umfassend einen Steuerraum (15), welcher an einem Außenumfang des Kolbenelements (20) ausgebildet ist und im Verbindungspfad zwischen dem Gasströmungspfad im Gasinjektor und dem Regelventil (8) liegt.

7. Gasinjektor nach Anspruch 6, wobei eine Drossel (18) zwischen dem Steuerraum (15) und dem Gasströmungspfad im Gasinjektor vorhanden ist.

8. Gasinjektor nach einem der vorhergehenden Ansprüche, ferner umfassend einen Speicher (19), welcher mit dem Unterdruckanschluss (80) in Fluidverbindung steht, wobei das Regelventil (8) zwischen dem Unterdruckanschluss (80) und dem Speicher (19) angeordnet ist.

9. Gasinjektor nach einem der vorhergehenden Ansprüche, wobei der zweite Dichtsitz (7) ein elastomeres Dichtelement (70) aufweist.

10. Brennkraftmaschine umfassend einen Gasinjektor nach einem der vorhergehenden Ansprüche.

11. Brennkraftmaschine nach Anspruch 10, wobei die Brennkraftmaschine als Unterdruckquelle ein Ansaugrohr (81) aufweist und das Regelventil in einer Verbindungsleitung zwischen dem Ansaugrohr (81) und dem Unterdruckanschluss (80) angeordnet ist.

## Claims

1. Gas injector for injecting a gaseous medium, comprising
- a closing element (2) which opens and closes a passage opening (3) at a first sealing seat (4),
- an actuator (5) for actuating the closing element (2),
- a reset element (6) for resetting the closing element (2),
- a second sealing seat (7) which is arranged between a gas supply connection (12) and the first sealing seat (4) in the direction of flow of the gaseous medium and opens and closes a gas flow path (A) in the gas injector,
- a vacuum connection (80) which is arranged upstream of the second sealing seat (7) in the direction of flow through the gas injector, and
- a control valve (8) which is fluidically connected to the vacuum connection (80) and is configured to connect the vacuum connection (80) to a vacuum source (81) in order to open the second sealing seat (7),
wherein the first sealing seat (4) and the second sealing seat (7) are arranged along an axis X-X of the gas injector.

2. Gas injector according to Claim 1, wherein the second sealing seat (7) is formed between an axially movable piston element (20) and a housing component (11).

3. Gas injector according to Claim 2, further comprising a third sealing seat (9) which is arranged on the piston element (20) and opens and closes a connecting path between the gas flow path in the gas injector and the control valve (8), wherein the piston element (20) can be moved back and forth between the second sealing seat (7) and the third sealing seat (9).

4. Gas injector according to Claim 3, wherein the third sealing seat (9) is formed between a radially outwardly directed flange (23) on the piston element (20) and a stop ring (13) on the housing component (11).

5. Gas injector according to any one of Claims 2 to 4, wherein the piston element (20) is a hollow piston which has a piston end surface (22), on which the second sealing seat (7) seals.

6. Gas injector according to any one of Claims 3 to 5, further comprising a control space (15) which is formed on an outer circumference of the piston element (20) and lies in the connecting path between the gas flow path in the gas injector and the control valve (8).

7. Gas injector according to Claim 6, wherein a throttle (18) is present between the control space (15) and the gas flow path in the gas injector.

8. Gas injector according to any one of the preceding claims, further comprising an accumulator (19) which is fluidically connected to the vacuum connection (80), wherein the control valve (8) is arranged between the vacuum connection (80) and the accumulator (19).

9. Gas injector according to any one of the preceding claims, wherein the second sealing seat (7) has an elastomeric sealing element (70).

10. Internal combustion engine comprising a gas injector according to any one of the preceding claims.

11. Internal combustion engine according to Claim 10, wherein the internal combustion engine has an intake pipe (81) as a vacuum source, and the control valve is arranged in a connecting line between the intake pipe (81) and the vacuum connection (80).

## Revendications

1. Injecteur de gaz pour l'injection d'un milieu gazeux, comprenant :
- un élément de fermeture (2) qui libère et ferme une ouverture de passage (3) au niveau d'un premier siège d'étanchéité (4),
- un actionneur (5) pour actionner l'élément de fermeture (2),
- un élément de rappel (6) pour réinitialiser l'élément de fermeture (2),
- un deuxième siège d'étanchéité (7) qui est agencé dans la direction d'écoulement du milieu gazeux entre un raccord d'alimentation en gaz (12) et le premier siège d'étanchéité (4) et qui libère et ferme un chemin d'écoulement de gaz (A) dans l'injecteur de gaz,
- un raccord de dépression (80) qui est agencé avant le deuxième siège d'étanchéité (7) dans la direction d'écoulement de l'injecteur de gaz, et
- une soupape de régulation (8) qui est en communication fluidique avec le raccord de dépression (80) et qui est adaptée pour relier le raccord de dépression (80) à une source de dépression (81) afin d'ouvrir le deuxième siège d'étanchéité (7),
le premier siège d'étanchéité (4) et le deuxième siège d'étanchéité (7) étant agencés le long d'un axe X-X de l'injecteur de gaz.

2. Injecteur de gaz selon la revendication 1, dans lequel le deuxième siège d'étanchéité (7) est réalisé entre un élément de piston (20) mobile axialement et un composant de boîtier (11).

3. Injecteur de gaz selon la revendication 2, comprenant en outre un troisième siège d'étanchéité (9) qui est agencé sur l'élément de piston (20) et qui libère et ferme un chemin de communication entre le chemin d'écoulement de gaz dans l'injecteur de gaz et la soupape de régulation (8), l'élément de piston (20) pouvant se déplacer en va-et-vient entre le deuxième siège d'étanchéité (7) et le troisième siège d'étanchéité (9).

4. Injecteur de gaz selon la revendication 3, dans lequel le troisième siège d'étanchéité (9) est réalisé entre une bride (23) dirigée radialement vers l'extérieur sur l'élément de piston (20) et une rondelle de butée (13) sur le composant de boîtier (11).

5. Injecteur de gaz selon l'une quelconque des revendications 2 à 4, dans lequel l'élément de piston (20) est un piston creux qui présente une surface frontale de piston (22) sur laquelle le deuxième siège d'étanchéité (7) assure l'étanchéité.

6. Injecteur de gaz selon l'une quelconque des revendications 3 à 5, comprenant en outre une chambre de commande (15) qui est réalisée sur une périphérie extérieure de l'élément de piston (20) et qui est située dans le chemin de communication entre le chemin d'écoulement de gaz dans l'injecteur de gaz et la soupape de régulation (8).

7. Injecteur de gaz selon la revendication 6, dans lequel un étranglement (18) est prévu entre la chambre de commande (15) et le chemin d'écoulement de gaz dans l'injecteur de gaz.

8. Injecteur de gaz selon l'une quelconque des revendications précédentes, comprenant en outre un réservoir (19) qui est en communication fluidique avec le raccord de dépression (80), la soupape de régulation (8) étant agencée entre le raccord de dépression (80) et le réservoir (19).

9. Injecteur de gaz selon l'une quelconque des revendications précédentes, dans lequel le deuxième siège d'étanchéité (7) présente un élément d'étanchéité élastomère (70).

10. Moteur à combustion interne comprenant un injecteur de gaz selon l'une quelconque des revendications précédentes.

11. Moteur à combustion interne selon la revendication 10, dans lequel le moteur à combustion interne présente un tuyau d'aspiration (81) en tant que source de dépression et la soupape de régulation est agencée dans une conduite de communication entre le tuyau d'aspiration (81) et le raccord de dépression (80).
